# EUROPEAN PATENT APPLICATION

(11) **EP 2 554 775 A1**
(43) Date of publication of application: **06.02.2013**
(21) Application number: 11762395.9
(22) Date of filing: 18.02.2011
(51) Int. Cl.: E06B 9/68, B60J 3/00

(54) **WINDOW SHADE DEVICE**

(30) Priority: 31.03.2010 JP 2010081214
(71) Applicant: Ashimori Industry Co., Ltd., Osaka-shi, Osaka 550-0014 (JP)
(72) Inventor: HATA, Koichiro, Settsu-shi Osaka 566-0001 (JP)
(74) Representative: Wilhelms · Kilian & Partner Patentanwälte
(86) International application number: PCT/JP2011/053456
(87) International publication number: WO 2011/122154

(57) **Abstract**

Included are a shade, a pair of rails disposed so as to have a gradually decreasing spacing therebetween from proximal ends to distal ends thereof, a housing device disposed on the proximal end side, a drawing member supporting a drawing-side edge of the shade, and a pair of runners connected to both ends of the drawing member and configured to respectively move along the pair of rails. Upon the pair of runners being guided by the pair of rails to move, the drawing member deforms to have a dimension varying in the width direction of the shade, and causes the drawing-side edge of the shade to advance and retract in the drawing/housing direction P such that the drawing-side edge is disposed on the drawing side exceeding the pair of runners in a state in which the shade is drawn.

## Description

### Technical Field

Patent Document 1 discloses the shade device for covering a gap through which light penetrates even when the shade is extended. The window roller blind according to Patent Document 1 includes a roller blind fixed at one end to a wind-up shaft, a pull rod assembly fixed to the other end of the roller blind, and a guide member for guiding the pull rod assembly along the pullout path. The guide member is configured to guide the pull rod assembly to a first pivoted position when being in a rest position and to a second pivoted position rotated with respect to the first pivoted position when being in a functional position. The pull rod assembly includes a contoured plate having a convexly curved edge that is positioned on a top thereof for closing substantially all of the gap in the functional position.

### Background Art

Depending on target windows, shade devices are subject to constraints in disposing rails that guide a shade because of space or the like, and accordingly, the entire window cannot be shielded in the drawing/housing direction of the shade at times.

### Prior Art Document

### Patent Document

Patent Document 1: Japanese Patent Application Laid-Open No. 2007-126143

### Summary of the Invention

### Problem to be Solved by the Invention

Unfortunately, it is difficult to rotate the pull rod assembly such that the contoured plate changes its position to a position corresponding to the gap through which light penetrates. In the case of Patent Document 1, it is difficult to cover a gap reliably to shield the entire window at times.

Therefore, an object of the present invention is to entirely shield a window more reliably.

### Means to Solve the Problem

A first aspect relates to a shade device that shields a window, including: a shade configured to shield the window; a pair of rails disposed so as to have a gradually decreasing spacing therebetween from proximal ends to distal ends thereof, a housing device disposed on the proximal end side of the pair of rails, to which the shade is mounted so as to be drawn therefrom and housed therein; a drawing member that supports a drawing-side edge of the shade, is configured to deform such that a dimension thereof varies in a width direction of the shade, and causes, upon the deformation, the drawing-side edge of the shade to advance and retract in a drawing/housing direction; and a pair of runners connected to both ends of the drawing member and configured to respectively move along the pair of rails, wherein upon the pair of runners being guided by the pair of rails to move, the drawing member deforms to have a dimension varying in the width direction of the shade in accordance with the spacing between the pair of rails, and causes the drawing-side edge of the shade to advance and retract in the drawing/housing direction such that the drawing-side edge of the shade is disposed on the drawing side exceeding said the of runners in a state in which the shade is drawn.

According to a second aspect, in the shade device of the first aspect, the drawing member is configured to cause the drawing-side edge of the shade to advance toward the drawing side in the drawing/housing direction when deforming to have a smaller dimension in the width direction of the shade, and cause the drawing-side edge of the shade to retract toward the housing side in the drawing/housing direction when deforming to have a larger dimension in the width direction of the shade.

According to a third aspect, in the shade device of the first or second aspect, the drawing member is a pantograph link mechanism.

According to a fourth aspect, in the shade device of the third aspect, the drawing member is configured by connecting a plurality of link members formed into a rod shape to form a plurality of parallelograms arranged in the width direction of the shade with opposite angles thereof facing each other, and the drawing member supports the drawing-side edge of the shade at positions of a plurality of drawing-side connecting parts positioned on the drawing side of the shade among connecting parts connecting said link members to each other.

According to a fifth aspect, in the shade device of the fourth aspect, the shade includes a stay provided at the drawing-side edge, and a part or all of the plurality of drawing-side connecting parts of the drawing member is connected to the stay so as to move relative thereto in the width direction of the shade.

According to a sixth aspect, in the shade device of the fourth or fifth aspect, the connecting parts between the drawing member and the pair of runners are located, in the drawing/housing direction of the shade, at the same positions as those of a plurality of housing-side connecting parts located on the housing side of the shade among the connecting parts connecting the link members to each other, or at the positions on the housing side exceeding the plurality of housing-side connecting parts.

According to a seventh aspect, the shade device of any one of the third to sixth aspects further includes an elastic member exerting a biasing force such that the drawing member deforms to become larger in the drawing/housing direction of the shade in a state in which the shade is housed.

According to an eighth aspect, the shade device of any one of the first to seventh aspects further includes a drive mechanism causing the pair of runners to move along the pair of rails.

### Effects of the Invention

According to the shade device of the first aspect, the drawing member is configured to cause the drawing-side edge of the shade to advance and retract in the drawing/housing direction as deforming such that a dimension thereof varies in the width direction of the shade in accordance with the spacing between the pair of rails. The drawing-side edge of the shade is disposed on the drawing side exceeding the pair of runners in the state in which the shade is drawn, which enables to shield the entire window more reliably.

According to the shade device of the second aspect, the drawing member is configured to cause the drawing-side edge of the shade to advance in the drawing/housing direction when deforming so as to have a smaller dimension in the width direction of the shade. Therefore, in the state in which the shade is drawn, the drawing member deforms such that the dimension thereof varies to become smaller in the width direction of the shade, to thereby be in the state in which the drawing-side edge of the shade is caused to advance toward the drawing side in the drawing/housing direction. Accordingly, the drawing-side edge of the shade is disposed on the drawing side exceeding the pair of runners, which enables to shield the entire window more reliably.

According to the shade device of the third aspect, the drawing member is a pantograph link mechanism, and accordingly, deforms to become larger and smaller in the drawing/housing direction as deforming to become larger and smaller in the width direction of the shade in accordance with the spacing between the pair of rails. When the pair of runners are moved to the distal end side of the pair of rails by the deformation to become larger and smaller in the drawing/housing direction, the drawing member deforms to become larger toward the drawing side in the drawing/housing direction. This enables the drawing-side edge of the shade to be disposed on the drawing side exceeding the pair of runners.

According to the shade device of the fourth aspect, the drawing member supports the drawing-side edge of the shade at the positions of the plurality of drawing-side connecting parts, which enables to draw the drawing-side edge of the shade toward the drawing side further when deforming to become larger in the drawing/housing direction of the shade. That is, the entire window can be shielded also in a case where the distance between the drawing-side stop position of the pair of runners and the edge of the window is relatively large.

According to the shade device of the fifth aspect, the shade includes the stay provided to the drawing-side edge, and thus, is drawn and housed more stably while suppressing sagging. Further, a part or all of the plurality of drawing-side connecting parts of the drawing member is connected to the stay so as to move relative thereto in the width direction of the shade, which enables the drawing member to deform to become larger and smaller smoothly in the width direction of the shade.

According to the shade device of the sixth aspect, the connecting parts between the drawing member and the pair of runners are located at the same positions as those of the plurality of housing-side connecting parts or at the positions on the housing side exceeding the plurality of housing-side connecting parts in the drawing/housing direction of the shade. Accordingly, if the pair of runners are moved to the distal end side of the pair of rails, the drawing member deforms to become larger, and the plurality of drawing-side connecting parts are disposed on the drawing side further exceeding the pair of runners. This enables to dispose the drawing-side edge of the shade on the drawing side exceeding the drawing-side stop positions of the pair of runners by a larger amount. That is, the entire window can be shielded more reliably also in a case where the distance between the drawing-side stop positions of the pair of runners and the edge of the window is relatively large.

According to the shade device of the seventh aspect, the drawing member is biased by the elastic member so as to deform to become larger in the drawing/housing direction. This reduces the force required for drawing the shade from the housed state and the load imposed on the shade device by the above-mentioned force, which enables to start drawing the shade smoothly.

According to the shade device of the eighth aspect, the drive mechanism is included, which enables to automatically perform the operation of drawing and housing a shade with ease.

### Brief Description of Drawings

FIG. 1 is a view showing a shade device in a state in which a shade is housed.
FIG. 2 is a view showing the shade device in a state in which the shade is drawn.
FIG. 3 is a plan view showing a drawing member and a stay.
FIG. 4 is a view on arrow A of FIG. 2.
FIG. 5 is a view showing an operation of drawing or housing the shade.

### Embodiment for Carrying Out the Invention

Hereinafter, a shade device according to an embodiment is described.

### <Configuration of shade device>

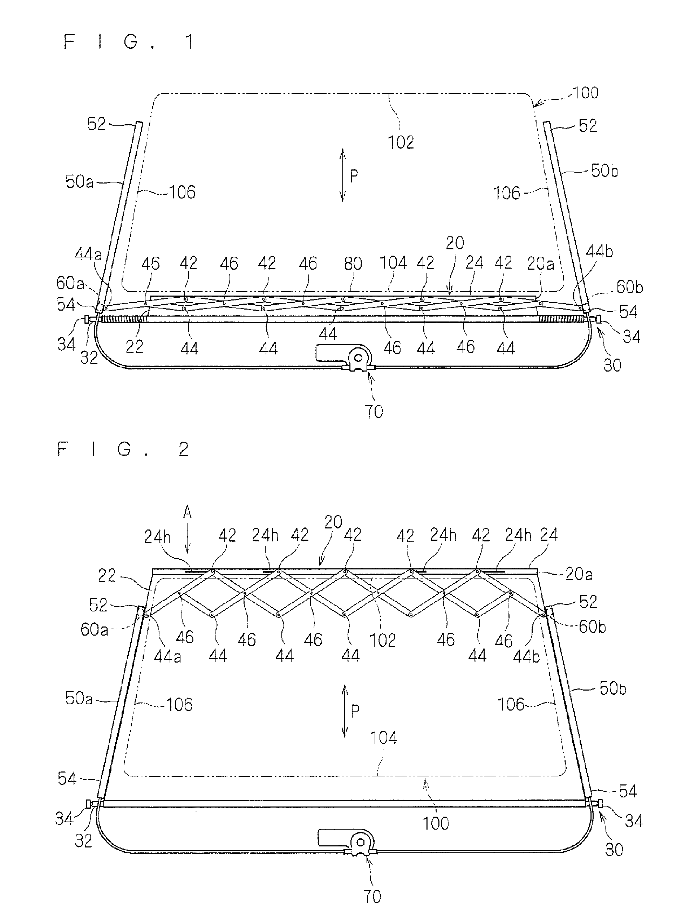

The configuration of a shade device 10 is described with reference to FIGS. 1 to 4. The shade device 10 is a device for shielding a window 100 with a shade 20.

The shade device 10 is configured such that the shade 20 is moved by a drawing member 40 connected with a pair of runners 60a and 60b that are guided by a pair of rails 50a and 50b and the shade 20 is drawn from and housed in a housing device 30, to thereby shield the window 100. The shade device 10 is configured to draw the shade 20 beyond the pair of runners 60a and 60b guided by the pair of rails 50a and 50b. The shade device 10 is more suitable for, for example, a case under the constraint that the pair of rails 50a and 50b cannot be provided to extend from one edge to the other edge of the window 100 or that the pair of runners 60a and 60b cannot be moved to a distal end 52 side of the pair of rails 50a and 50b, in terms of space.

Description is now given of an example in which the window 100 to which the shade device 10 is applied is a rear window of a vehicle, which is formed into an isosceles trapezoid having a short side 102 and a long side 104 opposed thereto. Needless to say, the shade device 10 is applicable not only to a rear window of a vehicle, but also to a side (side door) window of a vehicle and windows other than ones of vehicles. Besides, the shade device 10 is applicable to windows having shapes other than an isosceles trapezoidal shape. Note that description is given assuming that the direction in which the short side 102 and the long side 104 of the window 100 extend (horizontal direction of FIGS. 1 and 2) is a width direction.

The shade device 10 includes the shade 20, the housing device 30, the drawing member 40, the pair of rails 50a and 50b, the pair of runners 60a and 60b, a drive mechanism 70, and an elastic member 80.

The shade 20 includes a sheet part 22 that can shield the window 100 of interest and a stay 24 mounted to one edge of the sheet part 22. The sheet part 22 is formed by, for example, cutting and sewing a mesh-like fabric material, resin sheet, or the like into the shape and size suitable for shielding the window 100. In this case, the sheet part 22 is formed into an approximately isosceles trapezoidal shape larger than the window 100 in accordance with the shape of the window 100. The stay 24 is a long-rod-like member formed of a resin material or a metal material such as aluminum, and is mounted along the short-length-side edge of the sheet part 22. More specifically, the stay 24 is formed to have approximately the same length dimension as that of the short-length-side edge of the sheet part 22. Further, a plurality of hole parts 24h for connection to the drawing member 40 are formed in the stay 24 as described below. In this case, the shade 20 has an isosceles trapezoidal shape as a whole, and its edge to which the stay 24 is provided is referred to as a drawing-side edge 20a.

The shade 20 is mounted to the housing device 30 so as to be drawn therefrom and housed therein. The housing device 30 includes a wind-up shaft 32 and a support part 34 that supports the wind-up shaft 32 so as to rotate relative thereto about an axis. The wind-up shaft 32 is rotativley biased against the support part 34 by, for example, a coil spring (not shown). The shade 20 has one edge fixed to the wind-up shaft 32 on the side opposite to the drawing-side edge 20a, and in the state in which a drawing force is not applied thereto, is maintained in the housed state of being wound up by the wind-up shaft 32 by the rotational biasing force of the coil spring (see FIG. 1). Then, when the stay 24 provided to the drawing-side edge 20a of the shade 20 housed in the housing device 30 is pulled, the shade 20 is drawn from the housing device 30 (see FIG. 2).

The housing device 30 is disposed on the long side 104 side of the window 100 (proximal end 54 side of the pair of rails 50a and 50b described below, see FIGS. 1 and 2). More specifically, the housing device 30 is disposed inside an interior material on the long side 104 side (in this case, beneath a rear window of a vehicle) of an interior material surrounding the window 100, which is hidden from the outside. The support part 34 of the housing device 30 may be formed so as to be mounted at a position at which the housing device 30 is disposed by screwing or the like. The shade 20 can be drawn from the housing device 30 through an opening formed in the interior material on the long side 104 side.

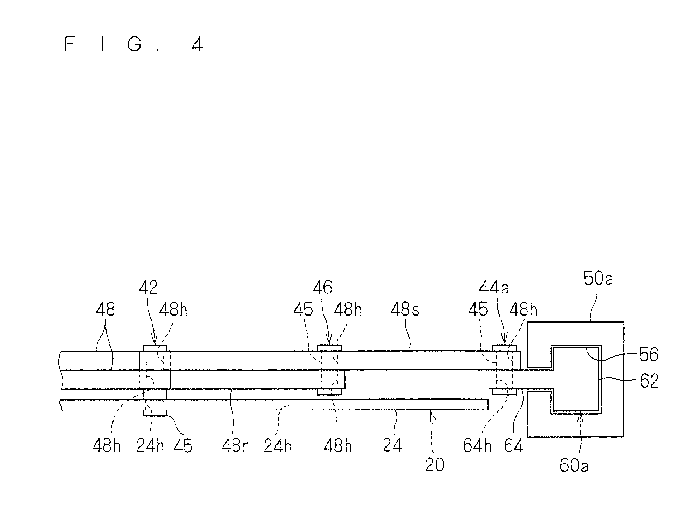

The pair of rails 50a and 50b are each formed into a long rod shape and include a guide groove part 56 along the longitudinal direction thereof. The pair of rails 50a and 50b are formed in a linear shape or curved shape (in this case, a linear shape) so as to extend along the sides 106 of the window 100 of interest. The guide groove parts 56 are formed so as to guide the pair of runners 60a and 60b described below between the distal ends 52 and the proximal ends 54 of the pair of rails 50a and 50b along the longitudinal direction thereof. More specifically, the guide groove parts 56 each has an inner space for housing one end 62 of each of the pair of runners 60a and 60b and are open so as to allow the other end 64 thereof to extend outwardly (see FIG. 4). In this case, the guide groove part 56 has a cross-sectional shape larger (in this case, slightly larger) than that of the one end 62 of each of the pair of runners 60a and 60b and is open to become narrow so as to prevent the one end 62 from slipping off. The pair of rails 50a and 50b are formed into a shape in which they are symmetrical, which may be formed to have different lengths or shapes depending on the window 100 of interest.

The pair of rails 50a and 50b are disposed so as to have a gradually decreasing spacing therebetween from the proximal end 54 toward the distal end 52 (see FIGS. 1 and 2). In the relationship with the housing device 30, the housing device 30 is disposed on the proximal end 54 side of the pair of rails 50a and 50b. In the state in which the pair of rails 50a and 50b are applied to the window 100 of interest, they are respectively disposed so as to have a gradually decreasing spacing from the long side 104 side toward the short side 102 side along the sides 106 of the window 100. In this case, the pair of rails 50a and 50b are disposed so as to be inclined at approximately the same angle of inclination with respect to the direction orthogonal to the short side 102 and the long side 104 (drawing/housing direction P of the shade 20), correspondingly to the shape of the window 100. Needless to say, the pair of rails 50a and 50b may be disposed at angles of inclination different from each other with respect to the drawing/housing direction P of the shade 20.

The pair of rails 50a and 50b are disposed in a position approximately parallel to the plane formed by the width direction of the window 100 and the drawing/housing direction P. In this case, the pair of rails 50a and 50b are disposed inside the interior materials of the side 106 portions of the window 100, which is hidden so as not to overlap the window 100.

In this case, the pair of rails 50a and 50b are extended merely from the long side 104 side (side in front of the long side 104) of the window 100 to the side in front of the short side 102 (see FIGS. 1 and 2). That is, the distal ends 52 of the pair of rails 50a and 50b are positioned on long side 104 side with respect to the short side 102, and the pair of rails 50a and 50b cannot guide the pair of runners 60a and 60b up to the position of the short side 102 in the drawing/housing direction P of the shade 20.

The pair of runners 60a and 60b are allowed to move along the longitudinal direction of the guide groove parts 56 of the pair of rails 50a and 50b in the state in which the one ends 62 are housed in the guide groove parts 56 and the other ends 64 extend from the openings (see FIG. 4). Formed at the other ends 64 of the pair of runners 60a and 60b are hole parts 64h that pass therethrough in the direction approximately orthogonal to the plane formed by the width direction and the drawing/housing direction P, for connection to the drawing member 40.

The drawing member 40 supports the drawing-side edge 20a of the shade 20 and has both ends connected to the pair of runners 60a and 60b (see FIGS. 1 to 4). In this case, the drawing member 40 supports the stay 24 provided to the drawing-side edge 20a of the shade 20. The drawing member 40 is configured to move in the drawing/housing direction P of the shade 20 as the pair of runners 60a and 60b move along the pair of rails 50a and 50b so as to draw and house the shade 20. In this case, the state in which the pair of runners 60a and 60b are located at the drawing-side stop positions (in this case, distal ends 52) on the side closest to the distal ends 52 so as to move along the pair of rails 50a and 50b and the shade 20 is drawn almost entirely is referred to as the drawn state of the shade 20. Meanwhile, the state in which the pair of runners 60a and 60b are located at the housing-side stop positions (in this case, proximal ends 54) on the side closest to the proximal ends 54 so as to move along the pair of rails 50a and 50b and the shade 20 is housed almost entirely is referred to as the housed state of the shade 20.

When the pair of runners 60a and 60b are moved along the pair of rails 50a and 50b, the spacing between the pair of runners 60a and 60b becomes larger or smaller in accordance with the spacing between the pair of rails 50a and 50b. Meanwhile, the drawing member 40 is configured to deform such that a dimension thereof varies in the width direction of the shade 20. The drawing member 40 is configured to cause the drawing-side edge 20a of the shade 20 to which the stay 24 is provided to advance and retract in the drawing/housing direction P in accordance with the deformation. That is, the drawing member 40 deforms such that, as the pair of runners 60a and 60b are guided by the pair of rails 50a and 50b to move, a dimension thereof varies in the width direction of the shade 20 in accordance with the spacing between the pair of rails 50a and 50b, and causes the drawing-side edge 20a of the shade 20 to advance and retract in the drawing/housing direction P. In the state in which the pair of runners 60a and 60b are positioned at the distal ends 52 of the pair of rails 50a and 50b (drawn state of the shade 20), the drawing-side edge 20a of the shade 20 is disposed on the drawing exceeding the pair of runners 60a and 60b.

More specifically, the drawing member 40 causes the drawing-side edge 20a of the shade 20 to advance toward the drawing side in the drawing/housing direction P when deforming such that the dimension thereof becomes smaller in the width direction of the shade 20. Meanwhile, the drawing member 40 causes the drawing-side edge 20a of the shade 20 to retract toward the housing side in the drawing/housing direction P when deforming such that the dimension thereof becomes larger in the width direction of the shade 20.

To describe in terms of the force acting on the drawing member 40, if the spacing between the pair of runners 60a and 60b becomes larger and smaller, the force for increasing and decreasing the dimension in the width direction of the shade 20 acts on the drawing member 40. If the force is exerted to decrease the dimension in the width direction of the shade 20, the drawing member 40 converts that force into one in the drawing/housing direction P to cause the drawing-side edge 20a of the shade 20 to advance toward the drawing side. Meanwhile, if the force is exerted to increase the dimension in the width direction of the shade 20, the drawing member 40 converts that force into one in the drawing/housing direction P to cause the drawing-side edge 20a of the shade 20 to retract toward the housing side.

In this case, the drawing member 40 is a pantograph link mechanism configured to be scalable mainly in the width direction of the shade 20. The drawing member 40 deforms to become larger and smaller also in the drawing/housing direction P of the shade 20 as deforming to become larger and smaller in the width direction. More specifically, the drawing member 40 is configured to deform to become smaller in the drawing/housing direction P as deforming to become larger in the width direction of the shade 20, and deform to become larger toward the drawing side in the drawing/housing direction P as deforming to become smaller in the width direction. That is, the drawing member 40 is configured to cause the drawing-side edge 20a of the shade 20 to advance toward the drawing side through the deformation to become larger in the drawing/housing direction P.

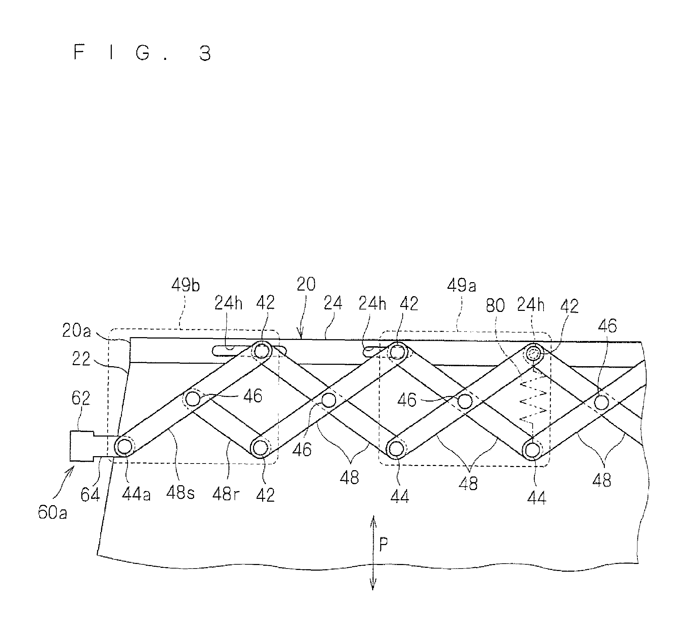

To describe a specific configuration, the drawing member 40 is configured by connecting a plurality of link members 48 formed into a flat bar shape to form a plurality of parallelograms (in this case, diamond shapes) in the width direction of the shade 20 with opposite angles thereof facing each other. The plurality of link members 48 constitute a plurality of intermediate members 49a connected in a line and end members 49b respectively connected to both ends of the plurality of intermediate members 49a (see FIG. 3). Among the plurality of link members 48, the pair of link members 48 constituting the end members 49b are referred to as one link member 48s and the other link member 48r.

The intermediate member 49a is an X-shaped member in which the pair of link members 48 having the same length dimension are connected so as to rotate relative to each other about one axis in the intermediate portion thereof in the state in which they are caused to intersect each other and overlap each other in the thickness direction. The plurality of link members 48 that constitute the plurality of intermediate members 49a are all formed to have the same length dimension. The end member 49b is configured by connecting the end of the other link member 48r having a half length dimension of the one link member 48s to the intermediate portion of the one link member 48s having the same length dimension as that of the link member 48 constituting the intermediate member 49a. Note that the length dimensions of the link members 48, 48r, and 48s are determined based on the advancing amount of the drawing-side edge 20a of the shade 20 with respect to the pair of runners 60a and 60b, the spacing and inclined form of the pair of rails 50a and 50b, and the like.

In this case, four intermediate members 49a are arranged in a parallel manner in the width direction to be connected, and the end members 49b are connected to both ends in the width direction thereof. The intermediate members 49a are connected to each other so as to rotate about one axis relative thereto with the ends of the respective link members 48 overlapped each other in the thickness direction. The intermediate member 49a and the end member 49b are connected to each other such that the ends of the one link member 48s and the other link member 48r and the ends of the link members 48 corresponding thereto rotate about one axis relative thereto.

Needless to say, the number of intermediate members 49a constituting the drawing member 40 is not limited to four, which may be determined based on the advancing amount of the drawing-side edge 20a of the shade 20 with respect to the pair of runners 60a and 60b, the spacing and inclined form of the pair of rails 50a and 50b, and the like. An even number of intermediate members 49a are preferably provided such that one of the connecting parts that support the drawing-side edge 20a of the shade 20 is located at the center in the width direction of the drawing member 40, as described below.

It suffices that the respective portions of the link members 48, 48s, and 48r are connected as, for example, described below. That is, the link members 48, 48s, and 48r in which the hole parts 48h passing therethrough in the thickness direction at the connecting positions are caused to overlap each other such that the hole parts 48h approximately coincide with each other, to thereby connect the link members 48, 48s, and 48r in the state in which approximately cylindrically-shaped connecting axis members 45 having a small diameter portion that can be inserted into the hole parts 48h are inserted therethrough (see FIG. 4). This enables the drawing member 40 to be scalable in the width direction and the drawing/housing direction P on the plane orthogonal to the axial direction of the connecting axis member 45.

As a whole, the drawing member 40 has a shape in which a plurality of parallelograms having the same shape as well as the same size are arranged in the width direction between ones of the intermediate members 49a and the end members 49b. Each of the parallelogram portions deforms into the same shape through a change of the opposite angle while keeping a side of a constant length so as to deform to become larger and smaller in the width direction and also deform to become larger and smaller in the drawing/housing direction P.

The one link members 48s of the end members 49b are respectively connected to the pair of runners 60a and 60b so as to rotate about one axis relative thereto, at the ends on the outermost side in the width direction of the end members 49b (see FIG. 3). As in the state where the link members 48 are connected to each other, the link members 48 and the pair of runners 60a and 60b are connected using the connecting axis members 45 by overlapping the hole part 48h and the hole part 64h so as to approximately coincide with each other. In this case, the one link members 48s are connected to the pair of runners 60a and 60b in a state of pointing the drawing side in the drawing/housing direction P toward the outside in the width direction.

Among the connecting parts between the plurality of link members 48, the connecting parts located on the drawing side of the shade 20, the connecting parts located on the housing side thereof, and the connecting parts located in the intermediate portion thereof are referred to as drawing-side connecting parts 42, housing-side connecting parts 44, and intermediate connecting parts 46, respectively (see FIGS. 1 and 2). The connecting parts between the both ends (the one link members 48s of the end members 49b) of the drawing member 40 and the pair of runners 60a and 60b are referred to as drawing-side connecting parts 44a and 44b, respectively. The plurality of drawing-side connecting parts 42 and the plurality of housing-side connecting parts 44 are provided, which are each odd numbers (in this case, five). One of the five drawing-side connecting parts 42 that is positioned at the center is located at the intermediate position of the drawing member 40 in the width direction even if the drawing member 40 is moved in the drawing/housing direction P and deforms to become larger and smaller in the width direction. In this case, the one drawing-side connecting part 42 positioned at the center is configured to move on the center line between the pair of rails 50a and 50b (that is, on the center line in the width direction of the shade 20).

The drawing member 40 supports the drawing-side edge 20a (in this case, stay 24) of the shade 20 at the positions of the plurality of drawing-side connecting parts 42. More specifically, the drawing member 40 is connected to the stay 24 such that a part or all of the plurality of drawing-side connecting parts 42 is movable in the width direction of the shade 20 relative thereto. In this case, in the drawing member 40, the one that is positioned at the center among the five drawing-side connecting parts 42 is connected to the stay 24 so as not to move relative thereto in the longitudinal direction at the intermediate portion in the longitudinal direction of the stay 24 (width direction of the shade 20), and the other four are connected to the stay 24 so as to move relative thereto in the longitudinal direction of the stay 24. That is, the one drawing-side connecting part 42 positioned at the center moves on the center line in the width direction of the shade 20, and thus, is not moved relative to the stay 24 in the width direction.

The plurality of hole parts 24h are formed at the positions corresponding to the drawing-side connecting parts 42 in the width direction of the shade 20. The hole part 24h is formed into a hole shape that passes through in the axial direction of the connecting axis member 45 for the drawing-side connecting part 42. More specifically, the hole part 24h corresponding to the one drawing-side connecting part 42 positioned at the center is formed into an approximately circular hole shape at the intermediate portion in the longitudinal direction of the stay 24. The hole parts 24h corresponding to the other four drawing-side connecting parts 42 are formed into a long hole shape along the longitudinal direction of the stay 24, correspondingly to movement paths of the drawing-side connecting parts 42 relative to the one drawing-side connecting part 42 positioned at the center. That is, the drawing-side connecting part 42 positioned more apart from the one drawing-side connecting part 42 positioned at the center (closer to the outermost side in the width direction thereof) makes a larger amount of relative movement. Accordingly, the hole part 24h positioned closer to the outermost side in the width direction of the stay 24 is formed to become longer.

It suffices that, for example, a small-diameter portion that can be inserted into the hole part 24h is formed on one side (lower side of FIG. 4) in the axial direction of the connecting axis member 45, and the drawing-side connecting part 42 is connected to the stay 24 in the state in which the small-diameter portion is inserted into the hole part 24h. It suffices that each hole part 24h is formed, in the width direction of the shade 20, to have a width larger (in this case, slightly larger) than the diameter of the small-diameter portion for connection to the stay 24 of each connecting axis member 45 and to have a length larger (in this case, slightly larger) than the movement path of the connecting axis member 45. The small-diameter portion for connection to the stay 24 of the connecting axis member 45 moves through the hole part 24h of the stay 24, whereby the drawing member 40 deforms to become larger and smaller in the state of being connected to the stay 24.

Needless to say, the mode in which the drawing member 40 is connected to the stay 24 at the positions of the plurality of drawing-side connecting parts 42 is not limited to the combination of the hole part 24h and the small-diameter portion of the connecting axis member 45 and, for example, the combination of a recessed groove and a projection may be adopted.

In order to suppress the shade 20 from being, for example, deformed or worn out, the drawing member 40 may support the stay 24 such that the housing-side connecting parts 44 and the connecting axis members 45 of the intermediate connecting parts 46 are in non-contact with the shade 20. That is, it suffices that the drawing member 40 is configured so as to support the shade 20 at the positions apart from the connecting axis members 45 in the axial direction thereof (see FIG. 4).

It is preferable that the drawing member 40 be configured such that the housing-side connecting parts 44a and 44b are located at the same positions as those of the plurality of housing-side connecting parts 44 or the positions on the housing side exceeding the plurality of housing-side connecting parts 44 (in this case, the same positions) in the drawing/housing direction P of the shade 20. The case where the housing-side connecting parts 44a and 44b are located at the positions on the housing side exceeding the plurality of housing-side connecting parts 44 refers to the case where the one link member 48s constituting the end member 49b is formed to have a longer dimension than that of the link member 48 constituting the intermediate member 49a. The housing-side connecting parts 44a and 44b are located at the above-mentioned positions, whereby the drawing-side edge 20a of the shade 20 that is supported by the plurality of drawing-side connecting parts 42 is drawn toward the drawing side further in the drawing/housing direction P. In order to allow the drawing-side edge 20a of the shade 20 to advance toward the drawing side further beyond the pair of runners 60a and 60b, at least, the housing-side connecting parts 44a and 44b are required to be positioned, on the housing side exceeding the positions (in this case, the plurality of drawing-side connecting parts 42) at which the drawing-side edge 20a of the shad 20 is supported.

The drawing member 40 is configured such that the plurality of drawing-side connecting parts 42 are in line with each other. Even if the drawing member 40 deforms to become larger and smaller, the plurality of drawing-side connecting parts 42 are in line with each other. For this reason, the stay 24 of the shade 20 can be supported in a stable manner. Similarly, the plurality of housing-side connecting parts 44 and the plurality of intermediate connecting parts 46 are each in line with one another. The connecting parts 42, 44, and 46 are each disposed in line at equal intervals.

In this case, the drawing member 40 is supported such that the plurality of drawing-side connecting parts 42, the plurality of housing-side connecting parts 44, and the plurality of intermediate connecting parts 46 are each in line with one another along the width direction in the state in which the pair of runners 60a and 60b are located at the same position in the drawing/housing direction P (see FIGS. 1, 2, and 5). In addition, the drawing member 40 is made such that the plurality of drawing-side connecting parts 42 are opposed to the plurality of housing-side connecting parts 44 in the drawing/housing direction P.

The drawing member 40 deforms to become larger and smaller in the width direction when the plurality of drawing-side connecting parts 42, the plurality of housing-side connecting parts 44, and the plurality of intermediate connecting parts 46 each move toward and away from one another and, at the same time, deforms to become larger and smaller in the drawing/housing direction P when the plurality of drawing-side connecting parts 42 and the plurality of housing-side connecting parts 44 move toward and away from each other.

The drawing member 40 causes the shade 20 to be housed in the housing device 30 in the state in which the pair of runners 60a and 60b are located at the proximal ends 54 of the pair of rails 50a and 50b (see FIG. 1). In the housed state of the shade 20, the drawing member 40 becomes larger in the width direction and becomes smaller in the drawing/housing direction P. The drawing member 40 causes the shade 20 to be drawn from the housing device 30 in the state in which the pair of runners 60a and 60b are located at the proximal ends 54 of the pair of rails 50a and 50b (see FIG. 2). In this drawn state, the drawing member 40 becomes smaller in the width direction and becomes larger in the drawing/housing direction P. More specifically, the plurality of drawing-side connecting parts 42 advance toward the drawing side exceeding the pair of runners 60a and 60b (housing-side connecting parts 44a and 44b). That is, the drawing-side edge 20a (stay 24) of the shade 20 is disposed on the drawing side exceeding the pair of runners 60a and 60b.

Needless to say, the mode in which the drawing member 40 supports the drawing-side edge 20a of the shade 20 is not limited to the mode in which the drawing member 40 is connected to the stay 24. That is, the shade 20 may adopt the configuration in which the stay 24 is not provided to the drawing-side edge 20a. In this case, it suffices that the drawing member 40 is connected directly to the drawing-side edge 20a being the end on the short-length side of the sheet part 22, and that a hole part for connection to the drawing member 40 is provided to the drawing-side edge 20a. Alternatively, there can be adopted a mode in which a stretchable material is used for the sheet part 22 so that the sheet part 22 becomes larger and smaller along with the deformation of the drawing member 40 to become larger and smaller in the width direction, without providing a hole part for connection.

The drawing member 40 is not limited the case where the drawing-side edge 20a (stay 24) of the shade 20 is supported at the positions of the plurality of drawing-side connecting parts 42. For example, the drawing-side edge 20a (stay 24) of the shade 20 can be supported at the positions of the plurality of intermediate connecting parts 46 and the positions of the respective portions of the other link members 48 in the same mode as that of the plurality of drawing-side connecting parts 42, or using pins, screwing or the like. That is, it suffices that in the drawn) state of the shade 20, the drawing-side edge 20a of the shade 20 is disposed on the drawing side exceeding the drawing-side stop positions of the pair of runners 60a and 60b.

The drawing member 40 is not limited to a pantograph link mechanism but is only required to allow the drawing-side edge 20a of the shade 20 to be disposed on the drawing side exceeding the pair of runners 60a and 60b in the drawn state of the shade 20. For example, the drawing member 40 can adopt the configuration including a long member mounted to the drawing-side edge 20a of the shade 20 and rod-like link members that are respectively connected to both ends of the long member so as to rotate relative thereto and are respectively connected to the pair of runners 60a and 60b so as to rotate relative thereto. That is, the drawing member 40 is configured so as to, when deforming to have a smaller dimension in the width direction, have a larger angle of inclination with respect to the width direction of the link member and cause the long member to advance toward the drawing side. Alternatively, the drawing member 40 may be configured such that the drawing-side edge 20a of the shade 20 is disposed on the drawing side exceeding the pair of runners 60a and 60b, using a flexible beam member convexly deformable toward the drawing side. In this case, the beam member may be connected to the stay 24 or may directly support the edge of the sheet part 22.

The drive mechanism 70 is configured so as to drive the pair of runners 60a and 60b to move along the pair of rails 50a and 50b between the proximal ends 54 and the distal ends 52 thereof (see FIGS. 1 and 2). In a case where the pair of runners 60a and 60b cannot move up to the distal ends 52 of the pair of rails 50a and 50b, the drive mechanism 70 is only required to drive the pair of runners 60a and 60b to move up to the drawing-side stop positions thereof. Then, the drive mechanism 70 causes the pair of runners 60a and 60b to move, whereby the shade 20 can be moved in the drawing/housing direction P. The drive mechanism 70 is configured to move the pair of runners 60a and 60b to be located at the same position in the drawing/housing direction P. In this case, the pair of runners 60a and 60b are moved at an approximately equal speed. Needless to say, in a case where the pair of rails 50a and 50b are disposed at angles of inclination different from each other with respect to the drawing/housing direction P, or in a case where they have lengths different from each other, the moving speeds of the pair of runners 60a and 60b may be respectively changed in accordance with the angles or lengths of the rails 50a and 50b.

For example, the drive mechanism 70 may adopt the configuration in which the pair of runners 60a and 60b are respectively mounted to portions of a wire and are moved along the pair of rails 50a and 50b by driving the wire to be, for example, wound up or fed by a motor.

It suffices that the drive mechanism 70 is connected to an operation part such as a switch (not shown) so as to allow the operation of drawing and housing the shade 20 through operating of the operation part. In a case where the drive mechanism 70 is applied to the window 100 of a vehicle, a switch for operating the shade 20 may be provided inside the vehicle.

Needless to say, the drive mechanism 70 is not limited to the above-mentioned configuration. For example, the drive mechanism 70 may adopt the configuration in which a member that has flexibility, is not easily bent in a case of being pushed in the longitudinal direction, and includes a plurality of teeth formed continuously in the longitudinal direction is caused to advance and retract by a gear driven by a motor, to thereby move the pair of runners 60a and 60b. Alternatively, the configuration in which the shade 20 is driven to be drawn and housed may be omitted, and the configuration may be made such that the shade 20 is manually drawn and housed with, for example, a handle for drawing that is provided to the shade 20 or the drawing member 40.

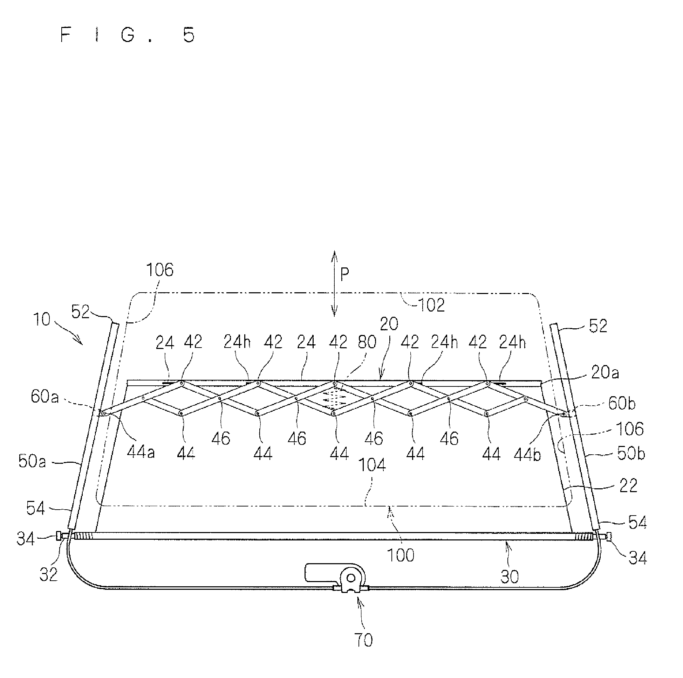

The shade device 10 includes the elastic member 80 for exerting a biasing force so as to deform the drawing member 40 to become larger in the drawing/housing direction P in the housed state of the shade 20. For example, the elastic member 80 may adopt the mode of biasing the pair of drawing-side connecting part 42 and housing-side connecting part 44 opposed to each other in a direction in which they become apart from each other or the mode of biasing the adjacent drawing-side connecting parts 42, the adjacent housing-side connecting parts 44, or the adjacent intermediate connecting parts 46 in a direction in which they become close to each other. A coil spring, a rubber material (in a case where parts are biased in the direction in which they become close to each other), or the like is adoptable as the above-mentioned elastic member 80. Alternatively, the elastic member 80 is obtained by disposing a plate spring, a torsion coil spring, or the like having a V-shape in the contracting state or expanding state to the inside or outside of an angle formed by the link members 48 connected with the connecting parts 42, 44, and 46 so as to make the angle large or small. Note that FIGS. 3 and 5 show, by a chain double-dashed line, the example in which the elastic member 80 being a coil spring is disposed between the drawing-side connecting part 42 and the housing-side connecting part 44 that are opposed to each other in a compressed state. In this case, it suffices that the elastic member 80 is compressed in the housed state of the shade 20 and has a natural length in the drawn state thereof. Note that the elastic member 80 is not shown in FIGS. 1 and 2.

### <Action of shade device>

The action of the shade device 10 is described with reference to FIGS. 1, 2. and 5.

First, the action of the shade device 10 when the shade 20 is drawn is described. The initial state of the shade device 10 is such that the shade 20 is housed as shown in FIG. 1. That is, the pair of runners 60a and 60b are located at the proximal ends 54 of the pair of rails 50a and 50b, and the shade 20 is housed in the housing device 30. In this state, the shade 20 is in the state in which the drawing-side edge 20a is located on the side closer to the housing device 30 with respect to the long side 104 of the window 100 and does not shield the window 100. The drawing member 40 is larger in the width direction and smaller in the drawing/housing direction P, and the four drawing-side connecting parts 42 except for the one positioned at the center are disposed at the positions on the outermost side of the hole parts 24h of the stay 24 in the width direction of the shade 20. Note that the drawing member 40 is hidden in the interior material on the long side 104 side of the window 100.

A user causes the drive mechanism 70 to work so as to draw the shade 20 via an operation part or the like.

The drive mechanism 70 causes the pair of runners 60a and 60b to move from the proximal ends 54 of the pair of rails 50a and 50b toward the distal end 52 side thereof, so that the drawing member 40 is moved toward the drawing side along the drawing/housing direction P. Then, the shade 20 whose drawing-side edge 20a is supported by the drawing member 40 is drawn.

The elastic member 80 acts a biasing force so as to deform the drawing member 40 to become larger in the drawing/housing direction P, whereby the drawing member 40 starts moving toward the drawing side smoothly.

The drawing member 40 per se deforms to become gradually smaller in the width direction and deforms to become gradually larger in the drawing/housing direction P, as moving toward the drawing side in accordance with the spacing between the pair of rails 50a and 50b (see FIGS. 1 and 5 in this order). That is, the force is exerted on the drawing member 40 to have a smaller dimension in the width direction as a result of the spacing between the pair of runners 60a and 60b becoming smaller, so that the drawing member 40 converts the force toward the inner side in the width direction into the force in the drawing/housing direction P and deforms to become larger toward the drawing side in the drawing/housing direction P. The connecting axis members 45 for the four drawing-side connecting parts 42 other than the one positioned at the center move through the hole parts 24h along the longitudinal direction of the stay 24 along with the deformation of the drawing member 40 to become smaller in the width direction. Note that the drawing-side connecting part 42 positioned at the center is connected to the stay 24 so as not to move relative thereto, and thus, the stay 24 moves through a certain path. This prevents the shade 20 from sagging, twisting, or the like in the width direction of the shade 20 due to, for example, the stay 24 slipping out of position. The plurality of drawing-side connecting parts 42 are moved to advance relative to the pair of runners 60a and 60b (housing-side connecting parts 44a and 44b) toward the drawing side in the drawing/housing direction P as the drawing member 40 deforms to become larger in the drawing/housing direction P.

When the pair of runners 60a and 60b are moved to the distal ends 52 of the pair of rails 50a and 50b, the shade 20 is drawn (see FIG. 2). In this state, the drawing member 40 is smaller in the width direction and is larger in the drawing/housing direction P. More specifically, the drawing member 40 is in the state in which the drawing-side edge 20a supported at the positions of the plurality of drawing-side connecting parts 42 is disposed to advance on the drawing side exceeding the drawing-side stop positions (in this case, distal ends 52 of the pair of rails 50a and 50b) of the pair of runners 60a and 60b. That is, the drawing-side edge 20a of the shade 20 is disposed beyond the short side 102 of the window 100 positioned on the drawing side exceeding the drawing-side stop positions of the pair of runners 60a and 60b, and the shade 20 shields the entire window 100.

Next, the action of the shade device 10 in the case of housing the shade 20 is described.

A user causes the drive mechanism 70 to work so as to house the shade 20 via an operation part or the like.

The drive mechanism 70 causes the pair of runners 60a and 60b to move from the distal ends 52 of the pair of rails 50a and 50b toward the proximal end 54 side thereof, whereby the drawing member 40 is moved toward the housing-side along the drawing/housing direction P. Then, the shade 20 is housed along with the movement of the drawing member 40.

In the case of housing the shade 20, the housing device 30 (wind-up shaft 32 rotatively biased) pulls the shade 20 toward the housing side. Accordingly, the drawing member 40 starts moving toward the housing side smoothly.

The drawing member 40 per se deforms to become gradually larger in the width direction and deforms to become gradually smaller in the drawing/housing direction P, as moving toward the housing side in accordance with the spacing between the pair of rails 50a and 50b (see FIGS. 2 and 5 in this order). That is, the spacing between the pair of runners 60a and 60b becomes larger, whereby the force acts on the drawing member 40 to increase the dimension in the width direction. Accordingly, the drawing member 40 converts the force toward the outside in the width direction into the force in the drawing/housing direction P, to thereby deform to become smaller.

Then, the pair of runners 60a and 60b are moved to the proximal ends 54 of the pair of rails 50a and 50b, so that the shade 20 is housed (see FIG. 1). In this state, the drawing member 40 is smaller in the drawing/housing direction P and is housed inside the interior material on the long side 104 side of the window 100 in a compact manner.

While the description has been given of the example in which the shade device 10 is applied to the window 100 having an isosceles trapezoidal shape, the shade device 10 is also applicable to windows having other shapes. For example, examples of the windows to which the shade device 10 is applied include a window whose side portion connecting the short side 102 and the long side 104 opposed to each other is curved (for example, is formed to bulge in the width direction) or stepped. The examples also include the case where the short side 102 and the long side 104 are not parallel to each other. Needless to say, the shade device 10 is applicable to windows having various shapes though they do not have the shape in which the short side 102 and the long side 104 are opposed to each other. That is, it suffices that the pair of rails 50a and 50b are disposed to have a gradually decreasing spacing from the proximal ends 54 toward the distal ends 52 irrespective of the shape of the window 100.

The application of the shade device 10 is not limited to the case where the pair of rails 50a and 50b cannot be extended from one edge to the other edge of a window. That is, the shade device 10 is also applicable to the case where the pair of rails 50a and 50b can be extended from one edge to the other edge of the window 100, and the entire window 100 is shielded more reliably also in this case.

The shade device 10 is not limited to the case where the pair of runners 60a and 60b are moved to the distal ends 52 of the pair of rails 50a and 50b. That is, also in the case where the pair of runners 60a and 60b are only allowed to move midway in the pair of rails 50a and 50b, the window 100 can be covered for a larger amount by disposing the drawing-side edge 20a of the shade 20 on the drawing side exceeding the pair of runners 60a and 60b. It is preferable that the pair of runners 60a and 60b be moved to the distal ends 52 of the pair of rails 50a and 50b such that the drawing-side edge 20a of the shade 20 is drawn on the drawing side exceeding the distal ends 52 of the pair of rails 50a and 50b.

According to the shade device 10 configured as described above, the drawing member 40 is configured to cause the drawing-side edge 20a of the shade 20 to advance and retract in the drawing/housing direction P as deforming to have a dimension varying in the width direction of the shade 20 in accordance with the spacing between the pair of rails 50a and 50b. Then, the drawing-side edge 20a of the shade 20 is disposed on the drawing side exceeding the pair of runners 60a and 60b in the drawn state of the shade 20, which enables to shield the entire window 100 more reliably.

The drawing member 40 is configured to cause the drawing-side edge 20a of the shade 20 to advance in the draiving/housing direction P when deforming to become smaller in dimension in the width direction of the shade 20. For this reason, in the state in which the pair of runners 60a and 60b are positioned at the distal ends 52 at which the spacing between the pair of rails 50a and 50b is small, the drawing member 40 deforms to become smaller in dimension in the width direction of the shade 20, so that the drawing-side edge 20a of the shade 20 is caused to advance toward the drawing side in the drawing/housing direction P. Accordingly, the drawing-side edge 20a of the shade 20 is disposed on the drawing side exceeding the pair of runners 60a and 60b, which enables to shield the entire window 100 more reliably.

The drawing member 40 is a pantograph link mechanism, and thus, deforms to become larger and smaller in the drawing/housing direction P as deforming to become larger and smaller in the width direction of the shade 20 in accordance with the spacing between the pair of rails 50a and 50b. Accordingly, the drawing member 40 becomes larger toward the drawing side in the drawing/housing direction P in the state in which the pair of runners 60a and 60b are located at the distal ends 52 of the pair of rails 50a and 50b, which enables to arrange the drawing-side edge 20a of the shade 20 on the drawing side exceeding the pair of runners 60a and 60b.

The drawing member 40 supports the drawing-side edge 20a of the shade 20 at the positions of the plurality of drawing-side connecting parts 42, and thus, is capable of drawing the drawing-side edge 20a of the shade 20 further toward the drawing side when deforming to become larger in the drawing/housing direction P of the shade 20. That is, the entire window 100 can be shielded also in a case where the spacing between the distal ends 52 of the pair of rails 50a and 50b and the edge (short side 102) of the window 100 is relatively large.

The shade 20 includes the stay 24 provided at the drawing-side edge 20a, and thus, can be drawn and housed more stably while suppressing sagging. Further, in the drawing member 40, a part or all of the plurality of drawing-side connecting parts 42 is connected to the stay 24 so as to move relative thereto in the width direction of the shade 20, which enables the drawing member 40 to deform to become larger and smaller smoothly in the width direction of the shade 20.

The housing-side connecting parts 44a and 44b are located at the same positions as those of the plurality of housing-side connecting parts 44 or on the housing side exceeding the plurality of housing-side connecting parts 44 in the drawing/housing direction P of the shade 20. Therefore, in the drawn state in which the shade 20, the drawing member 40 becomes larger, so that the plurality of drawing-side connecting parts 42 are disposed to advance further toward the drawing side exceeding the pair of runners 60a and 60b. This enables to dispose the drawing-side edge 20a of the shade 20 on the drawing side further exceeding the drawing-side stop positions of the pair of runners 60a and 60b. That is, the entire window 100 can be shielded also in the case where the distance between the distal ends 52 of the pair of rails 50a and 50b and the edge (short side 102) of the window 100 is relatively large.

The drawing member 40 is biased by the elastic member 80 so as to deform to become larger in the drawing/housing direction P, which reduces the force required for drawing the shade 20 from the housed state and the load imposed on the shade device 10 by the above-mentioned force. Accordingly, it is possible to start drawing the shade 20 smoothly.

The drive mechanism 70 is included, which enables to automatically perform the operation of drawing and housing the shade 20 with ease.

While the shade device 10 has been described above in detail, the foregoing description is in all aspects illustrative, and the present invention is not limited thereto. That is, numerous modifications and variations can be devised in the described aspects without departing from the scope of the invention.

### Description of Reference Symbols

- 10: shade device
- 20: shade
- 20a: drawing-side edge
- 24: stay
- 30: housing device
- 40: drawing member
- 42: drawing-side connecting part
- 44: housing-side connecting part
- 48: link member
- 50a and 50b: a pair of rails
- 52: distal end
- 54: proximal end
- 60a and 60b: a pair of runners
- 70: drive mechanism
- 80: elastic member
- 100: window
- P: drawing/housing direction

## Claims

1. A shade device that shields a window, comprising:
a shade configured to shield said window;
a pair of rails disposed so as to have a gradually decreasing spacing therebetween from proximal ends to distal ends thereof;
a housing device disposed on the proximal end side of said pair of rails, to which said shade is mounted so as to be drawn therefrom and housed therein,
a drawing member that supports a drawing-side edge of said shade, is configured to deform such that a dimension thereof varies in a width direction of said shade, and causes, upon said deformation, said drawing-side edge of said shade to advance and retract in a drawing/housing direction; and
a pair of runners connected to both ends of said drawing member and configured to respectively move along said pair of rails,
wherein upon said pair of runners being guided by said pair of rails to move, said drawing member deforms to have a dimension varying in the width direction of said shade in accordance with the spacing between said pair of rails, and causes said drawing-side edge of said shade to advance and retract in the drawing/housing direction such that said drawing-side edge of said shade is disposed on the drawing side exceeding said pair of runners in a state where said shade is drawn.

2. The shade device according to claim 1, wherein said drawing member is configured to:
cause said drawing-side edge of said shade to advance toward the drawing side in the drawing/housing direction when deforming to have a smaller dimension in the width direction of said shade; and
cause said drawing-side edge of said shade to retract toward the housing side in the drawing/housing direction when deforming to have a larger dimension in the width direction of said shade.

3. he shade device according to claim 1, wherein said drawing member is a pantograph link mechanism.

4. The shade device according to claim 3, wherein:
said drawing member is configured by connecting a plurality of link members formed into a rod shape to form a plurality of parallelograms arranged in the width direction of said shade with opposite angles thereof facing each other; and
said drawing member supports said drawing-side edge of said shade at positions of a plurality of drawing-side connecting parts positioned on the drawing side of said shade among connecting parts connecting said link members to each other.

5. The shade device according to claim 4, wherein:
said shade includes a stay provided at said drawing-side edge; and
a part or all of said plurality of drawing-side connecting parts of said drawing member is connected to said stay so as to move relative thereto in the width direction of said shade.

6. The shade device according to claim 4, wherein the connecting parts between said drawing member and said pair of runners are located, in the drawing/housing direction of said shade, at the same positions as those of a plurality of housing-side connecting parts located on the housing side of said shade among the connecting parts connecting said link members to each other, or at the positions on the housing side exceeding the plurality of housing-side connecting parts.

7. The shade device according to claim 3, further comprising an elastic member exerting a biasing force such that said drawing member deforms to become larger in the drawing/housing direction of said shade in a state in which said shade is housed.

8. The shade device according to claim 1, further comprising a drive mechanism causing said pair of runners to move along said pair of rails.
